# EUROPEAN PATENT APPLICATION

(11) **EP 2 996 125 A1**
(43) Date of publication of application: **16.03.2016**
(21) Application number: 14794665.1
(22) Date of filing: 07.05.2014
(51) Int. Cl.: H01G 9/20, H01L 51/44

(54) **DYE-SENSITIZED SOLAR CELL HAVING HIGH DURABILITY AND HIGH CONVERSION EFFICIENCY**

(30) Priority: 10.05.2013 JP 2013100094
(71) Applicant: Showa Co., Ltd., Ikoma-shi, Nara 630-0142 (JP)
(72) Inventor: TAKAYASU, Teruki, Ikoma-city Nara 630-0142 (JP)
(74) Representative: Vossius & Partner Patentanwälte Rechtsanwälte mbB
(86) International application number: PCT/JP2014/062240
(87) International publication number: WO 2014/181792

(57) **Abstract**

A dye-sensitized solar cell with high photoelectric conversion efficiency and excellent durability is provided.

The dye-sensitized solar cell comprises a photoelectrode and a counter electrode that are disposed opposite to each other via an electrolyte layer;
(1) the photoelectrode comprising a metal titanium material or titanium alloy material, and a semiconductor layer formed on the metal titanium material or titanium alloy material, the semiconductor layer containing a dye sensitizing agent;
(2) the counter electrode comprising a metal titanium material or titanium alloy material coated with an electrochemical-reduction catalyst layer;
(3) a light irradiation means being disposed between the photoelectrode and the counter electrode.

## Description

### Technical Field

The present invention relates to a dye-sensitized solar cell.

### Background Art

There are various types of solar cells, including monocrystal, polycrystal, and amorphous silicon solar cells; CIGS, CdTe, GaAs, and other compound semiconductor solar cells; organic thin-film solar cells; dye-sensitized solar cells; and the like.

Although silicon solar cells have gone mainstream, they require high-purity silicon materials. Moreover, the production of silicon solar cells requires a high temperature and a high vacuum, causing high production costs. Thus, there is room for improvement in this respect.

Under such circumstances, dye-sensitized solar cells have recently been attracting attention. Dye-sensitized solar cells can be easily produced because of their simple structure, and there are many constituent materials thereof.

Moreover, dye-sensitized solar cells can be produced at a low cost, and have high photoelectric conversion efficiency. For these reasons, dye-sensitized solar cells have been attracting attention as next-generation solar cells.

A dye-sensitized solar cell can be constructed by a simple method in which an electrolyte solution having reversible electrochemical redox characteristics is injected between a photoelectrode and a counter electrode, and the photoelectrode and the counter electrode are sealed and wire-connected.

The photoelectrode is conventionally produced in the following manner.

First, a paste agent containing titanium oxide particles is coated on the surface of a glass substrate on which a transparent conductive film, such as ITO (Indium Tin Oxide) or FTO (Fluorine Tin Oxide), is formed.

Then, the obtained coated product is heated at a temperature of 400 to 500°C, thereby producing an electrode having a porous titanium oxide layer.

Subsequently, the obtained electrode is immersed in an organic solution containing a dye sensitizing agent, such as ruthenium-based dye or indoline-based dye, thereby producing a photoelectrode in which the dye sensitizing agent is adsorbed to the surface of the porous titanium oxide.

Next, the counter electrode is produced by forming a catalyst layer having an electrochemical reduction action (e.g., a platinum layer) by sputtering or the like on a glass substrate on which a transparent conductive film is formed.

In conventional dye-sensitized solar cells, however, transparent conductive films that constitute photoelectrodes and counter electrodes have relatively high electrical resistance. Accordingly, there is room for improvement in terms of the significant reduction in the photoelectric conversion efficiency of dye-sensitized solar cells with a larger titanium oxide-coated area (area of transparent conductive film).

Moreover, the electrical resistance of the transparent conductive film is increased by heat treatment during the production of the porous titanium oxide layer (titanium oxide sintered body). Accordingly, there is room for improvement in terms of the reduction in the photoelectric conversion efficiency of dye-sensitized solar cells.

Under such circumstances, techniques to use metal titanium as a photoelectrode substrate have been examined. According to these techniques, electrical resistance is lower than that of glass substrates on which conventional transparent conductive films are formed; and corrosion resistance to iodine etc. contained in electrolyte solutions used in dye-sensitized solar cells is imparted.

For example, Patent Literature 1 discloses a dye-sensitized solar cell comprising a semiconductor film that is a porous titania film to which a dye sensitizing agent is adsorbed, an electrode supporting the semiconductor film, a counter electrode disposed opposite to the electrode, and an electrolyte layer that serves for charge transport between the electrode and the counter electrode.

In the dye-sensitized solar cell, a metal substrate is used as the electrode supporting the porous titania film to which a dye sensitizing agent is adsorbed; a conductive film having an opening structure is used as the counter electrode; and further, a light-receiving surface is provided on the counter electrode side. Moreover, the metal substrate is made of titanium or the like, and the conductive film is made of platinum or the like. In addition, the openings are mesh-shaped or stripe-shaped.

However, this dye-sensitized solar cell requires light irradiation from the counter electrode side, and thus light reaches dye adsorbed to the porous titania film of the electrode, via a colored electrolyte solution. Accordingly, light is attenuated, resulting in reduction in photoelectric conversion efficiency of the obtained dye-sensitized solar cell. There is thus room for improvement in this respect.

To address the above, the present inventor developed a new, dye-sensitized solar cell (Patent Literature 2).

The dye-sensitized solar cell developed by the present inventor comprises a photoelectrode and a counter electrode that are disposed opposite to each other via an electrolyte layer;
(1) the photoelectrode being structured such that a semiconductor layer containing a dye sensitizing agent is formed on a titanium material having an opening structure;
(2) a light-concentrating device being disposed on the titanium material of the photoelectrode; and
(3) a fiber member or a glass rod material being embedded in the titanium material having an opening structure. In this dye-sensitized solar cell, light can reach dye adsorbed to the titania layer on the photoelectrode, not via a colored electrolyte solution.

As a result, the obtained dye-sensitized solar cell has high photoelectric conversion efficiency. Further, the dye-sensitized solar cell desirably retains high photoelectric conversion efficiency even when the electrodes (photoelectrode and counter electrode) have large areas.

However, improvement is required to completely seal the titanium material having an opening structure with the fiber member or the glass rod material. Thus, there is room for improvement to produce a highly durable dye-sensitized solar cell that can prevent leakage of a highly volatile electrolyte solution, at a low cost.

### Citation List

### Patent Literature

PTL 1: JP2010-055935A
PTL 2: JP5161967B

### Summary of Invention

### Technical Problem

An object of the present invention is to provide a dye-sensitized solar cell with high photoelectric conversion efficiency and excellent durability.

### Solution to Problem

The present inventor conducted extensive research to solve the above problems of the prior art, and found that the above object can be achieved by a dye-sensitized solar cell having a specific structure.

Specifically, the present invention provides the following dye-sensitized solar cell.
Item 1. A dye-sensitized solar cell comprising a photoelectrode and a counter electrode that are disposed opposite to each other via an electrolyte layer;
   (1) the photoelectrode comprising a metal titanium material or titanium alloy material, and a semiconductor layer formed on the metal titanium material or titanium alloy material, the semiconductor layer containing a dye sensitizing agent;
   (2) the counter electrode comprising a metal titanium material or titanium alloy material coated with an electrochemical-reduction catalyst layer;
   (3) a light irradiation means being disposed between the photoelectrode and the counter electrode.
Item 2. The dye-sensitized solar cell according to Item 1, wherein the semiconductor layer comprises titanium oxide.
Item 3. The dye-sensitized solar cell according to Item 1 or 2, wherein the electrochemical-reduction catalyst layer is a platinum catalyst layer.
Item 4. The dye-sensitized solar cell according to any one of Items 1 to 3, wherein the light irradiation means concentrates sunlight or room light with a light-concentrating device and transmits the concentrated light to the dye-sensitized solar cell via one or more optical fibers.
Item 5. The dye-sensitized solar cell according to any one of Items 1 to 4, wherein the light irradiation means concentrates sunlight or room light with a light-concentrating device and transmits the concentrated light to the dye-sensitized solar cell via one or more optical fibers, and a member that emits the transmitted light is disposed in the dye-sensitized solar cell.
Item 6. The dye-sensitized solar cell according to any one of Items 1 to 3, wherein the light irradiation means uses an LED or organic EL.
Item 7. The dye-sensitized solar cell according to any one of Items 1 to 6, wherein the photoelectrode comprises a photoelectrode substrate having a semiconductor layer containing anatase-type titanium oxide on the surface thereof, the photoelectrode being produced by the following method comprising the steps of:
   (1) forming titanium nitride on the surface of a metal titanium material or titanium alloy material; and
   (2) anodizing the metal titanium material or titanium alloy material having the titanium nitride formed on the surface thereof obtained in step (1) using an electrolyte solution that has an etching effect on titanium at a voltage equal to or higher than the spark-discharge-generating voltage, thereby forming an anatase-type titanium oxide film.
Item 8. The dye-sensitized solar cell according to any one of Items 1 to 6, wherein the photoelectrode comprises a photoelectrode substrate having a semiconductor layer containing anatase-type titanium oxide on the surface thereof, the photoelectrode being produced by the following method comprising the steps of:
   (1) forming titanium nitride on the surface of a metal titanium material or titanium alloy material;
   (2) anodizing the metal titanium material or titanium alloy material having the titanium nitride formed on the surface thereof obtained in step (1) in an electrolyte solution that does not have an etching effect on titanium; and
   (3) heating the anodized metal titanium material or titanium alloy material obtained in step (2) in an oxidizing atmosphere, thereby forming an anatase-type titanium oxide film.
Item 9. The dye-sensitized solar cell according to Item 7 or 8, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.
Item 10. The method (the dye-sensitized solar cell) according to Item 9, wherein the heat treatment under a nitrogen gas atmosphere is performed in the presence of an oxygen-trapping agent.

### Advantageous Effects of Invention

The dye-sensitized solar cell of the present invention has high photoelectric conversion efficiency and excellent durability.

### Brief Description of Drawings

Fig. 1 is a schematic view (cross-sectional view) showing one embodiment of the dye-sensitized solar cell of the present invention.
Fig. 2 is a schematic view (cross-sectional view) showing one embodiment of the dye-sensitized solar cell of the present invention.
Fig. 3 is a schematic view (front view) showing one embodiment of the dye-sensitized solar cell of the present invention.
Fig. 4 shows current-voltage characteristics of the dye-sensitized solar cell of the Example.
Fig. 5 is a schematic view showing one embodiment using the dye-sensitized solar cell of the present invention.

### Description of Embodiments

The present invention is described in detail below. In the present specification, a metal titanium material and a titanium alloy material are also simply referred to as "titanium material."

The dye-sensitized solar cell of the present invention comprises a photoelectrode and a counter electrode that are disposed opposite to each other via an electrolyte layer;
(1) the photoelectrode comprising a metal titanium material or titanium alloy material, and a semiconductor layer formed on the metal titanium material or titanium alloy material, the semiconductor layer containing a dye sensitizing agent;
(2) the counter electrode comprising a metal titanium material or titanium alloy material coated with an electrochemical-reduction catalyst layer;
(3) a light irradiation means being disposed between the photoelectrode and the counter electrode.

The dye-sensitized solar cell of the present invention comprises a photoelectrode and a counter electrode, each made of a titanium material that does not transmit light. Light is irradiated through a light irradiation means from between the photoelectrode and the counter electrode. As a result, the dye-sensitized solar cell of the present invention can achieve high photoelectric conversion efficiency based on a light-confining effect.

Moreover, in the dye-sensitized solar cell of the present invention, a method for irradiating light excluding ultraviolet rays or the like that cause deterioration of a dye sensitizing agent can be adopted by virtue of the light irradiation means. Further, sealing in the dye-sensitized solar cell can be performed inexpensively.

As a result, the dye-sensitized solar cell of the present invention has excellent durability.

Moreover, the dye-sensitized solar cell of the present invention eliminates the need for sealing the openings of a conventional titanium material having an opening structure with a fiber member or a glass rod material.

As a result, the dye-sensitized solar cell of the present invention can prevent the leakage of a highly volatile electrolyte solution, and thus has excellent durability.

### (1) Photoelectrode

In the dye-sensitized solar cell, a photoelectrode and a counter electrode are disposed opposite to each other via an electrolyte layer. The photoelectrode is obtained by forming a semiconductor layer containing a dye sensitizing agent on a metal titanium material or titanium alloy material (hereinafter also referred to as "titanium material"; photoelectrode substrate).

### Photoelectrode Substrate

A titanium material itself can be used as the photoelectrode substrate. A titanium material serves as a substrate.

The metal titanium material is titanium itself. When a titanium alloy material is used, its type is not particularly limited. Examples of titanium alloys include Ti-6Al-4V, Ti-4.5Al-3V-2Fe-2Mo, Ti-0.5Pd, and the like.

Moreover, the photoelectrode substrate is preferably one in which a titanium material is treated by the following surface treatment method A or B to form an anatase-type titanium oxide film on the surface of the titanium material, because, for example, when electrons are transferred from the semiconductor layer to the photoelectrode substrate due to light excitation by the dye sensitizing agent, leakage of the electrons into the electrolyte solution layer is prevented.

The anatase-type titanium oxide film serves as a semiconductor layer.

In the photoelectrode substrate of the dye-sensitized solar cell of the present invention, a semiconductor layer containing a dye sensitizing agent is formed on a titanium material; thus, photoelectric conversion efficiency is high.

The thickness of the photoelectrode substrate is generally about 0.01 to 10 mm, preferably about 0.01 to 5 mm, and more preferably about 0.05 to 1 mm.

### Surface Treatment Method A

The photoelectrode substrate is preferably a photoelectrode substrate having a semiconductor layer containing anatase-type titanium oxide on the surface thereof, produced by the following method comprising the steps of:
(1) forming titanium nitride on the surface of a metal titanium material or titanium alloy material; and
(2) anodizing the metal titanium material or titanium alloy material having titanium nitride formed on the surface thereof obtained in step (1) using an electrolyte solution that has an etching effect on titanium at a voltage equal to or higher than the spark-discharge-generating voltage, thereby forming an anatase-type titanium oxide film.

### Surface Treatment Method B

The photoelectrode substrate is preferably a photoelectrode substrate having a semiconductor layer containing anatase-type titanium oxide on the surface thereof, produced by the following method comprising the steps of:
(1) forming titanium nitride on the surface of a metal titanium material or titanium alloy material;
(2) anodizing the metal titanium material or titanium alloy material having titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

### Step (1) of Surface Treatment Methods A and B

In the step of forming titanium nitride on the surface of a titanium material (step (1)), a layer of titanium nitride with a general thickness of about 0.1 to 100 µm can be formed on the surface of a titanium material.

The thickness of the titanium nitride layer is preferably about 0.5 to 50 µm, and more preferably about 1 to 10 µm.

The means for forming titanium nitride on the surface of a titanium material is not particularly limited. For example, titanium nitride is physically or chemically attached to the surface of a titanium material, or titanium and nitrogen are reacted on the surface of a titanium material to thereby form titanium nitride.

The step of forming titanium nitride is preferably performed by one treatment method selected from the group consisting of PVD treatment (physical vapor deposition), CVD treatment (chemical vapor deposition), spraying treatment (film formation by spraying), heat treatment under an ammonia gas atmosphere, and heat treatment under a nitrogen gas atmosphere.

Examples of the PVD treatment include ion plating, sputtering, and the like. Examples of the CVD treatment include thermal CVD treatment, plasma CVD treatment, laser CVD treatment, and the like. Examples of the spraying treatment include flame-spraying, arc-spraying, plasma-spraying, laser-spraying, and the like.

The heating temperature of the heat treatment under an ammonia gas or nitrogen gas atmosphere is preferably about 500°C or more, more preferably about 750 to 1050°C, and even more preferably about 750 to 950°C. It is preferable to heat a titanium material generally at about 500°C or more (preferably about 750°C or more) under a nitrogen gas atmosphere.

The heat treatment under an ammonia gas or nitrogen gas atmosphere is preferably performed in the presence of an oxygen-trapping agent.

It is particularly preferable to form titanium nitride by performing heat treatment under a nitrogen gas atmosphere in the presence of an oxygen-trapping agent.

The oxygen-trapping agent used in the heat treatment of a titanium material is, for example, substance or gas having a higher oxygen affinity than that of the titanium material. For example, a carbon material, metal powder, hydrogen gas, etc., can be preferably used. These oxygen-trapping agents may be used singly, or in a combination of two or more.

Examples of carbon materials include, but are not particularly limited to, graphite carbon, amorphous carbon, carbon having an intermediate crystal structure between graphite carbon and amorphous carbon, and the like.

The carbon material may have any shape, such as plate, foil, or powder. It is preferable to use a plate carbon material, in terms of handling properties, and because the thermal strain of the titanium material during heat treatment can be prevented.

Examples of metal powders include, but are not particularly limited to, metal powders of titanium, a titanium alloy, chromium, a chromium alloy, molybdenum, a molybdenum alloy, vanadium, a vanadium alloy, tantalum, a tantalum alloy, zirconium, zirconium, a zirconium alloy, silicon, a silicon alloy, aluminum, an aluminum alloy, and the like.

It is preferable to use a metal powder of titanium, a titanium alloy, chromium, a chromium alloy, zirconium, a zirconium alloy, aluminum, an aluminum alloy, or the like, because their oxygen affinity is high. The most preferable metal powder is a metal powder of titanium particles or a titanium alloy. These metal powders may be used singly, or in a combination of two or more.

The average particle diameter of the metal powder is preferably about 0.1 to 1000 µm, more preferably about 0.1 to 100 µm, and even more preferably about 0.1 to 10 µm.

The conditions for using an oxygen-trapping agent in an ammonia gas or nitrogen gas atmosphere can be suitably determined depending on the type and shape of the oxygen-trapping agent.

For example, when a carbon material or metal powder is used as the oxygen-trapping agent, a titanium material is brought into contact with the carbon material or metal powder so that the surface of the titanium material is covered with the carbon material or metal powder. Then, the titanium material is heated in an ammonia gas or nitrogen gas atmosphere.

Alternatively, when hydrogen gas is used as the oxygen-trapping agent, the titanium material is heated while hydrogen gas is introduced under an ammonia gas or nitrogen gas atmosphere.

The heat treatment can be performed in an atmosphere of ammonia gas, nitrogen gas, or a mixed gas of ammonia gas and nitrogen gas. It is most preferable to use nitrogen gas, in terms of convenience, profitability, and safety.

The reaction pressure of the heat treatment under an ammonia gas or nitrogen gas atmosphere is about 0.01 to 100 MPa, preferably about 0.1 to 10 MPa, and more preferably about 0.1 to 1 MPa. The heat treatment is preferably performed under a nitrogen gas atmosphere.

The heating time of the heat treatment under an ammonia gas or nitrogen gas atmosphere is preferably about 1 minute to 12 hours, more preferably about 10 minutes to 8 hours, and even more preferably about 1 hour to 6 hours. It is preferable to heat the titanium material for this period of time.

When a titanium material is heated under an ammonia gas or nitrogen gas atmosphere, it is preferable, in order to efficiently form titanium nitride on the surface of the titanium material, to reduce the pressure in the furnace for heat treatment using a rotary-type vacuum pump and optionally a mechanical booster pump or an oil diffusion pump, and to reduce the concentration of oxygen remaining in the furnace for heat treatment (in the nitriding furnace).

Titanium nitride can be efficiently formed on the surface of the titanium material by reducing the pressure in the furnace for heat treatment to preferably about 10 Pa or less, more preferably about 1 Pa or less, and even more preferably about 0.1 Pa or less.

Titanium nitride can be efficiently formed on the surface of a titanium material by supplying ammonia gas, nitrogen gas, or a mixed gas of ammonia gas and nitrogen gas into the decompressed furnace to return the pressure in the furnace, and heating the titanium material.

The heating temperature, heating time, and other conditions of the heat treatment using this furnace may be the same as the above-mentioned conditions. As the gas composition, it is most preferable to use nitrogen gas in terms of convenience, profitability, and safety.

Titanium nitride can be more efficiently formed on the surface of a titanium material by alternately repeating (several times) the decompression treatment that reduces the remaining oxygen concentration in the furnace for heat treatment, and the pressure-returning treatment that supplies nitrogen gas etc. into the furnace.

Furthermore, titanium nitride can be more efficiently formed on the surface of a titanium material by performing decompression treatment in the presence of an oxygen-trapping agent, and heat treatment under a gas atmosphere, such as ammonia gas or nitrogen gas.

The type of titanium nitride formed on the surface of a titanium material is not particularly limited. Examples thereof include TiN, Ti₂N, α-TiN_{0.3}, η-Ti₃N₂₋ₓ, ζ-Ti₄N₃₋ₓ (provided that X is 0 or more, and less than 3), mixtures thereof, amorphous titanium nitride, and the like.

Preferred among these are TiN, Ti₂N, and a mixture thereof; more preferred are TiN, and a mixture of TiN and Ti₂N; and particularly preferred is TiN.

As the means for forming titanium nitride in the present invention, one of the above methods may be used singly, or two or more of them may be used in combination. Of the above methods for forming titanium nitride, heat treatment of a titanium material under a nitrogen gas atmosphere is preferred in terms of convenience, mass production, production cost, or the like.

### Step (2) of Surface Treatment Method A

In the surface treatment method A, the titanium material having titanium nitride formed on the surface thereof is anodized using an electrolyte solution that has an etching effect on titanium at a voltage equal to or higher than the spark-discharge-generating voltage, thereby forming an anatase-type titanium oxide film (step (2)).

The produced photoelectrode substrate has an anatase-type titanium oxide-containing semiconductor layer on the surface thereof. An anatase-type titanium oxide film can be suitably formed by performing anodization. Due to the formation of an anatase-type titanium oxide film, high photoelectric conversion efficiency can be suitably exhibited.

In the surface treatment using a method of applying a voltage equal to or higher than the spark-discharge-generating voltage, an electrolyte solution that has an etching effect on titanium materials is preferably used.

The electrolyte solution preferably contains an inorganic acid and/or organic acid that has an etching effect on titanium. The electrolyte solution preferably further contains hydrogen peroxide. It is preferable to perform anodization by applying a voltage equal to or higher than the spark-discharge-generating voltage.

As the electrolyte solution, it is preferable to use an aqueous solution containing an inorganic acid and/or organic acid that has an etching effect on titanium materials.

Examples of the inorganic acid that has an etching effect on titanium materials include sulfuric acid, hydrofluoric acid, hydrochloric acid, nitric acid, aqua regia, and the like.

Examples of the organic acid that has an etching effect on titanium include oxalic acid, formic acid, citric acid, trichloroacetic acid, and the like.

These acids may be used singly, or in any combination of two or more regardless of whether they are organic acids or inorganic acids.

A preferable embodiment of an electrolyte solution containing two or more acids is, for example, an aqueous solution containing sulfuric acid and optionally phosphoric acid.

Although the proportion of the acids in this electrolyte solution varies depending on the type of acid used, anodization conditions, and other conditions, the total amount of the acids is generally 0.01 to 10 M, preferably 0.1 to 10 M, and more preferably 1 to 10 M. An example of an electrolyte solution containing sulfuric acid and phosphoric acid is an electrolyte solution containing 1 to 8 M sulfuric acid and 0.1 to 2 M phosphoric acid.

The electrolyte solution preferably contains hydrogen peroxide, in addition to the above organic acid and/or inorganic acid. The electrolyte solution containing hydrogen peroxide allows more efficient production of an anatase-type titanium oxide film.

When the electrolyte solution contains hydrogen peroxide, the proportion of hydrogen peroxide is not particularly limited, but is, for example, 0.01 to 5 M, preferably 0.01 to 1 M, and more preferably 0.1 to 1 M.

A preferable embodiment of the electrolyte solution used in the anodization is, for example, an aqueous solution containing 1 to 8 M sulfuric acid, 0.1 to 2 M phosphoric acid, and 0.1 to 1 M hydrogen peroxide.

An anatase-type titanium oxide film is obtained by immersing a titanium material in the above electrolyte solution, and performing anodization by applying a constant current so that a voltage equal to or higher than the spark-discharge-generating voltage is applied.

For example, the voltage equal to or higher than the spark-discharge-generating voltage is generally 100 V or more, and preferably 150 V or more.

The anodization can be performed, for example, by increasing the voltage to the spark-discharge-generating voltage at a constant rate, and applying a constant voltage for a certain period of time at a voltage equal to or higher than the spark-discharge-generating voltage.

The rate of increasing the voltage to the spark-discharge-generating voltage is generally 0.01 to 1 V/sec, preferably 0.05 to 0.5 V/sec, and more preferably 0.1 to 0.5 V/sec. Moreover, the time for applying a voltage equal to or higher than the spark-discharge-generating voltage is generally 1 minute or more, preferably 1 to 60 minutes, and more preferably 10 to 30 minutes.

The anodization by spark discharge can also be performed by controlling the current, in place of controlling the voltage. The current density in the anodization may be 0.1 A/dm² or more, but is preferably 1 A/dm² to 10 A/dm², in terms of profitability, convenience, and performance.

According to the above method, an anatase-type-titanium-oxide-containing film having a film thickness of about 1 to 100 µm can be obtained.

### Step (2) of Surface Treatment Method B

In the surface treatment method B, the titanium material having titanium nitride formed on the surface thereof is anodized in an electrolyte solution that does not have an etching effect on titanium (step (2)).

Then, the anodized titanium material is heated in an oxidizing atmosphere, thereby forming an anatase-type titanium oxide film (step (3)). The produced photoelectrode substrate has an anatase-type-titanium-oxide-containing semiconductor layer on the surface thereof.

The electrolyte solution preferably contains at least one acid selected from the group consisting of inorganic acids and organic acids that do not have an etching effect on titanium, or a salt compound thereof.

An amorphous titanium oxide film can be formed on the surface of the titanium material having titanium nitride formed on the surface thereof, by anodizing the titanium material in an electrolyte solution that does not have an etching effect on titanium.

The electrolyte solution that does not have an etching effect on titanium is preferably an electrolyte solution containing at least one compound selected from the group consisting of inorganic acids, organic acids, and salts thereof (hereinafter also referred to as "an inorganic acid or the like"). The electrolyte solution containing an inorganic acid or the like is preferably a dilute aqueous solution of phosphoric acid, phosphate, or the like.

Only performing step (2) of anodization in the surface treatment method B does not generate spark discharges, and crystalline titanium oxide, such as anatase-type titanium oxide, is not generally formed.

Anatase-type titanium oxide can be formed from amorphous titanium oxide in the subsequent heat treatment step under an oxidizing atmosphere. Therefore, because an amorphous titanium oxide film is effectively formed on the surface of the titanium material, it is preferable to anodize the titanium material having titanium nitride formed on the surface thereof.

The electrolyte solution that does not have an etching effect on titanium is preferably an electrolyte solution containing at least one compound (inorganic acid or the like) selected from the group consisting of inorganic acids (such as phosphoric acid), organic acids, and salts thereof (such as phosphate).

The inorganic acid that does not have an etching effect on titanium is preferably phosphoric acid, carbonic acid, or the like, in terms of convenience, profitability, safety, etc. The organic acid that does not have an etching effect on titanium is preferably acetic acid, adipic acid, lactic acid, or the like.

Salts of these acids, such as sodium dihydrogen phosphate, disodium hydrogen phosphate, sodium hydrogen carbonate, sodium acetate, potassium adipate, and sodium lactate, can also be used.

In addition, it is preferable to use an electrolyte solution containing an electrolyte, such as sodium sulfate, potassium sulfate, magnesium sulfate, sodium nitrate, potassium nitrate, magnesium nitrate, or calcium nitrate.

The electrolyte solution that does not have an etching effect on titanium is preferably an electrolyte solution containing at least one compound (inorganic acid or the like) selected from the group consisting of inorganic acids (such as phosphoric acid), organic acids, and salts thereof (such as phosphate). The most preferable inorganic acids etc. are phosphoric acid and phosphate.

The electrolyte solution is preferably a dilute aqueous solution of an inorganic acid or the like. The concentration of the inorganic acid or the like in the electrolyte solution is preferably about 1 wt.%, in terms of profitability and the like. For example, in an electrolyte solution containing phosphoric acid, the concentration of the phosphoric acid is preferably about 0.01 to 10 wt.%, more preferably about 0.1 to 10 wt.%, and even more preferably about 1 to 3 wt.%.

These acids may be used singly, or in any combination of two or more, regardless of whether they are organic acids or inorganic acids. A preferable embodiment of an electrolyte solution containing two or more acids is, for example, an aqueous solution containing phosphate and phosphoric acid.

Although the proportion of the acids in this electrolyte solution varies depending on the type of acid and acid salt used, anodization conditions, and other conditions, the total amount of the acids is generally 0.01 to 10 wt.%, preferably 0.1 to 10 wt.%, and more preferably 1 to 3 wt.%.

The titanium material having titanium nitride formed on the surface thereof obtained in the step of forming titanium nitride is immersed in a dilute electrolyte solution containing an inorganic acid or the like that does not have an etching effect on titanium.

Subsequently, anodization is performed by preferably applying a voltage of about 10 to 300 V. It is more preferable to perform anodization at a voltage of about 50 to 300 V, and even more preferably about 50 to 200 V.

The anodization treatment temperature is preferably about 0 to 80°C, in terms of convenience, profitability, safety, etc. It is more preferable to perform anodization at a temperature of about 10 to 50°C, and even more preferably about 20 to 30°C.

The anodization treatment time is preferably about 1 second to 1 hour. It is more preferable to perform anodization for about 10 seconds to 30 minutes, and even more preferably about 5 minutes to 20 minutes.

### Step (3) of Surface Treatment Method B

Next, the titanium material with a titanium oxide film formed on the surface thereof is heated in an oxidizing atmosphere, thereby forming an anatase-type titanium oxide film (step (3)).

When the metal titanium material or the like is only heated in an oxidizing atmosphere, rutile-type titanium dioxide is formed, but anatase-type titanium oxide is not sufficiently formed.

The titanium material having titanium nitride formed thereon and having a titanium oxide film (amorphous titanium oxide film) formed thereon (titanium material after anodization) is heated in an oxidizing atmosphere (air oxidation treatment, etc.), thereby forming an anatase-type titanium oxide film, which has excellent photocatalytic characteristics and photoelectric conversion characteristics among crystalline titanium oxides.

As a result, the titanium material after heat treatment has excellent photoelectric conversion characteristics.

The oxidizing atmosphere in which heat treatment is performed may be selected from an air oxidizing atmosphere, an atmosphere of a mixture of oxygen gas and nitrogen gas having any oxygen gas concentration, an oxygen gas atmosphere, and the like; however, heat treatment in an air oxidizing atmosphere is preferred in terms of convenience, profitability, safety, etc.

The temperature of the heat treatment in an oxidizing atmosphere is preferably about 300°C or more, because of the efficient conversion from amorphous titanium oxide to anatase-type titanium oxide. The temperature of the heat treatment in an oxidizing atmosphere is preferably about 800°C or less, in order to prevent a phase transition from anatase-type titanium oxide to rutile-type titanium dioxide. This is because the photoelectric conversion characteristics of rutile-type titanium dioxide are inferior to those of anatase-type titanium oxide.

The temperature of the heat treatment in an oxidizing atmosphere is more preferably about 300 to 800°C, even more preferably about 300 to 700°C, and particularly preferably about 400 to 700°C.

The reaction pressure of the heat treatment is about 0.01 to 10 MPa, preferably about 0.01 to 5 MPa, and more preferably about 0.1 to 1 MPa.

The heating time of the heat treatment is preferably about 1 minute to 12 hours, more preferably about 10 minutes to 8 hours, and even more preferably about 1 to 6 hours.

The crystalline titanium oxide film is preferably an anatase-type titanium oxide film. Open-voltage values are improved by using anatase-type titanium oxide, rather than rutile-type titanium dioxide, in a photoelectrode of a dye-sensitized solar cell; thus, the photoelectric conversion characteristics are also high.

The heat treatment after the anodization of the present invention results in the formation of a film containing a large amount of anatase-type titanium oxide having high photocatalytic activity.

The heat treatment allows the production of photoelectric conversion element materials in which a large amount of highly active anatase-type titanium oxide is formed on the surface of the titanium materials. The materials can also be used as photoelectric conversion element materials that achieve high conversion efficiency.

According to the above method, an anatase-type-titanium-oxide-containing film having a film thickness of about 1 to 100 µm can be obtained.

An excellent photoelectric conversion element material can be produced by forming titanium nitride on the surface of a titanium material, and incorporating, after the formation of titanium nitride and before the heat treatment in an oxidizing atmosphere, the step of performing anodization in an electrolyte solution, such as a dilute aqueous acid solution of phosphoric acid or the like that does not have an etching effect on titanium, or an aqueous solution of a salt of phosphoric acid or the like.

Due to the anatase-type titanium oxide (film) formed on their surface, the titanium materials can be used as photoelectric conversion element materials, such as photoelectrode substrates, of dye-sensitized solar cells, which have been attracting attention as next-generation solar cells.

### Semiconductor Layer

In the photoelectrode, a semiconductor layer containing a dye sensitizing agent is formed on a titanium material.

The semiconductor layer may be formed as an anatase-type titanium oxide film prepared by the above surface treatment method A or B. Further, a semiconductor layer can be formed by the step of performing heat treatment under an oxidizing atmosphere after applying a paste agent containing particles of titanium oxide etc.

It is preferable to form a semiconductor layer on the surface of the above-mentioned surface-treated titanium material. The semiconductor layer preferably comprises titanium oxide, zinc oxide, tin oxide, niobium oxide, tungsten oxide, or like metal oxides.

These metal oxides may be used singly, or in a combination of two or more. Preferred among the metal oxides is titanium oxide. The semiconductor layer preferably comprises titanium oxide among the metal oxides because, for example, there is a large difference between the flat band potential of the semiconductor that determines the open-circuit voltage of the photoelectrode, and the oxidation-reduction potential of the electrolyte; and injection of electrons from the dye sensitizing agent to the semiconductor proceeds efficiently.

The average particle diameter of titanium oxide particles is preferably about 0.1 to 3000 nm, more preferably about 1 to 1000 nm, and even more preferably about 10 to 500 nm.

The paste agent is prepared by, for example, dispersing titanium oxide particles in a solvent. The solvent is preferably polyethylene glycol. The content of titanium oxide particles in the paste agent is not particularly limited, and may be appropriately adjusted so that a sintered body is suitably formed.

The method for applying a paste agent to the titanium material is not particularly limited. For example, screen printing, inkjet printing, roll coating, doctor blading, spray-coating, etc., can be used.

The thickness of the coating film after applying the paste agent is not particularly limited, and may be suitably determined so that a titanium oxide sintered body having a desired thickness is formed.

As the semiconductor layer, a laminate of the titanium oxide sintered body and the titanium oxide film is obtained.

The temperature of the heat treatment is preferably about 100 to 600°C, and more preferably about 400 to 500°C. In particular, the titanium oxide particles can be suitably sintered together by heat treatment at a temperature of about 400 to 500°C.

The time of the heat treatment may be suitably determined depending on the heat treatment temperature etc. The heat treatment is performed in an oxidizing atmosphere (in an atmosphere in which oxygen is present; e.g., in the air).

### Dye Sensitizing Agent

In the photoelectrode, a semiconductor layer containing a dye sensitizing agent is formed on a titanium material.

The photoelectrode on which a semiconductor layer is formed by the above method is immersed in a solution containing a dye sensitizing agent, thereby allowing the dye sensitizing agent to be adsorbed to the titanium oxide (semiconductor layer).

The dye sensitizing agent is not particularly limited, as long as it is dye that can absorb light in the near-infrared light region and the visible light region. Preferred dye sensitizing agents are ruthenium metal complexes, such as red dye (N719) and black dye (N749); metal complexes other than ruthenium, such as copper phthalocyanine; organic complexes, such as eosine, rhodamine, merocyanine, and indoline; and the like. These dye sensitizing agents can be used singly, or in a combination of two or more. Among the dye sensitizing agents, ruthenium complexes are most preferred.

The dye sensitizing agent can be adsorbed to the titanium oxide layer by, for example, immersing the semiconductor layer, such as a titanium oxide layer, in a solution containing the dye sensitizing agent. The dye sensitizing agent can be attached to the semiconductor layer by chemical adsorption, physical adsorption, deposition, or the like.

The amount of dye sensitizing agent attached may be suitably determined depending on the area of the semiconductor layer etc. within a range that does not impair the effect of the present invention.

### (2) Counter Electrode

The counter electrode of the dye-sensitized solar cell is obtained by coating an electrochemical-reduction catalyst layer on a metal titanium material or titanium alloy material (titanium material).

The electrochemical-reduction catalyst layer may be a platinum catalyst layer, a carbon layer, poly(3,4-ethylenedioxythiophene) (PEDOT) layer, a gold layer, a silver layer, a copper layer, an aluminum layer, a rhodium layer, an indium layer, or the like.

The electrochemical-reduction catalyst layer is preferably a platinum catalyst layer because, for example, hydrogen overvoltage is low and electrons are easily injected into the electrolyte that has lost electrons in the electrolyte layer.

As the titanium material, the titanium material described above can be used. When a liquid electrolyte layer is used as the electrolyte layer, the titanium counter electrode suffers no corrosion due to highly corrosive halogen family compounds, such as iodine, contained in the electrolyte layer.

The thickness of the platinum catalyst layer is preferably about 0.001 to 2 µm.

Mirror-finished titanium or titanium alloy is preferable to allow light to be easily reflected.

The method for coating the platinum catalyst layer may be selected from electrolytic plating, PVD treatment, CVD treatment, and the like.

Further, the materials that form the counter electrode may include metals, such as platinum, gold, silver, copper, aluminum, rhodium, and indium; carbon; conductive metal oxides, such as ITO and FTO; and the like.

When a liquid electrolyte layer is used as the electrolyte layer, the counter electrode preferably comprises the above-described metal, metal oxide, or the like as a support; and a film, formed on the support, that exhibits a catalytic activity in the reaction of a redox species (reversible electrochemical redox reaction).

### (3) Electrolyte Layer

The electrolyte layer may be a layer that can be excited by light, supply electrons to the dye sensitizing agent achieving electron injection into the semiconductor layer, and reduce the dye sensitizing agent. The electrolyte layer may also be a layer in which electrons are supplied from the platinum catalyst layer of the counter electrode to the electrolyte that has lost electrons.

The thickness of the electrolyte layer, i.e., the distance between the photoelectrode and the counter electrode, is preferably 1 to 3000 µm, more preferably 10 to 1000 µm, and even more preferably 10 to 1000 µm.

The electrolyte layer may be a liquid, a gel, or a solid.

Examples of liquid electrolyte layers include non-aqueous electrolyte solutions containing a redox species; and the like. Preferred examples of the redox species include a combination of iodine and an iodide salt, such as lithium iodide, sodium iodide, potassium iodide, or calcium iodide; and a combination of bromine and a bromide salt, such as lithium bromide, sodium bromide, potassium bromide, or calcium bromide.

These may be used singly, or in a combination of two or more. Further, DMPII (1,2-dimethyl-3-propylimidazolium iodide), TBP (*tert*-butylpyridine), etc., may be added.

Examples of solvents include acetonitrile, 3-methoxy propionitrile, ethylene carbonate, propione carbonate, and the like. These solvents may be used singly, or in a combination of two or more.

Examples of gel electrolyte layers include those obtained by gelling the non-aqueous electrolyte solution with a polymer compound or the like.

Examples of solid electrolyte layers include known electrolytes for solar cells made of a conductive material capable of electron, hole, and ion transport. Examples of known electrolyte layers for solar cells used as solid electrolytes include hole transport materials, such as polycarbazole or triphenylamine; electron transport materials, such as tetranitrofluorenone; conductive polymers, such as poly-roll; and P-type semiconductors, such as copper iodide or copper thiocyanate.

Use of a gel electrolyte layer or a solid electrolyte layer is advantageous in that there is no electrolyte leakage problem.

### Separator (Spacer) and Sealing Material

In the dye-sensitized solar cell, a separator (spacer) is preferably disposed so as to prevent contact between the photoelectrode and the counter electrode.

When light is irradiated by the light irradiation means described later from the location at which the separator is disposed, the irradiated light is enclosed by the photoelectrode and the counter electrode, neither of which transmits light. As a result, the conversion efficiency of the dye-sensitized solar cell can be improved due to the light confinement.

The conversion efficiency is further improved by using a mirror-finished material to enhance the light reflectance of the counter electrode.

As the separator, a known separator generally used in the field of cells can be used. The separator may be an ionomer resin film, polyimide resin film, UV-cured acrylic resin, glass material, silane-modified polymer, polyimide tape, or the like.

The thickness and area of the separator are not particularly limited, and may be suitably determined depending on the scale etc. of the target solar cell.

Examples of the sealing material include UV-cured acrylic resin, ionomer resin films, epoxy resin, polyester resin, acrylic resin, hot-melt resin, silicone elastomers, butyl rubber elastomers, glass materials, and the like. TB3017B produced by ThreeBond can be used as the UV-cured acrylic resin. The sealing material can seal the gap between the photoelectrode and the counter electrode.

When a light transmission member (one or more optical fibers) and a light emission member are used as the light irradiation means, the separator (spacer) and the sealing material are preferably materials with high transparency because, for example, light transmitted from the light-concentrating device is easily guided into the dye-sensitized solar cell; accordingly, the conversion efficiency is improved.

The separator is preferably UV-cured acrylic resin, glass material, or the like. The sealing material is preferably UV-cured acrylic resin, acrylic resin, glass material, or the like.

### (4) Light Irradiation Means

In the dye-sensitized solar cell, a light irradiation means is disposed between the photoelectrode and the counter electrode.

The light irradiation means preferably concentrates sunlight or room light with a light-concentrating device, and transmits the concentrated light to the dye-sensitized solar cell via one or more optical fibers.

It is preferable that the light irradiation means concentrate sunlight or room light with a light-concentrating device and transmit the concentrated light to the dye-sensitized solar cell via one or more optical fibers, and that a member that emits the transmitted light be disposed in the dye-sensitized solar cell.

The member that emits the light disposed in the dye-sensitized solar cell is one or more optical fibers. And the optical fibers are preferably covered with a transparent material.

The light irradiation means preferably uses an LED or organic EL.

Light can be irradiated from between the photoelectrode and the counter electrode via one or more optical fibers that have efficiently absorbed sunlight or room light from the light-concentrating device.

### Light-Concentrating Device

The light-concentrating device is a device for concentrating sunlight or the like, and transmitting the light to a photoelectrode. Any light-concentrating device can be used as long as it can efficiently concentrate sunlight or room light. Known light-concentrating devices used for silicon solar cells or the like can be used.

A preferable light-concentrating device is one comprising a light-concentrating unit for concentrating sunlight or the like, and a transmission unit (a light transmission member) for transmitting the concentrated sunlight or the like to the photoelectrode.

Examples of the light-concentrating unit include condenser lenses, reflectors, prisms, and the like.

When a condenser lens is used as the light-concentrating unit, a lens having a light incident surface and a light emission surface may be used. For example, when the lens is a convex lens, sunlight or the like is concentrated after passing through the light incident surface, and then is released from the light emission surface of the convex lens, thereby collecting the entire sunlight or the like to the photoelectrode.

The condenser lens of the present invention is not limited to a convex lens, and may have other forms (including concave lenses) as long as it can concentrate sunlight or the like.

Any known lens can be used as the condenser lens. Examples thereof include acrylic resin, polyethylene terephthalate (PET), polycarbonate resin, glass, and the like.

When a reflector is used as the light-concentrating unit, the reflector may be disposed so as to allow sunlight or the like reflected thereby to reach the photoelectrode (via the transmission unit, if provided). A known reflector may be used as the reflector. Examples thereof include those on which metal, such as silver or aluminum, is vapor-deposited; metal plates containing those metals; and the like.

When a prism is used as the light-concentrating unit, a triangle prism formed of a transparent material, in which one of the surfaces is provided with a photoelectrode (or a transmission unit, if provided), may be used.

In the prism, sunlight or the like that is incident on the light-receiving surface into the prism is refracted by the light-receiving surface, thereby reaching the photoelectrode (via the transmission unit, if provided). Further, even if the sunlight or the like refracted by the light-receiving surface cannot reach the photoelectrode, it will undergo total reflection with another light-receiving surface, thereby reaching the photoelectrode.

Any known prism can be used as the prism. Examples thereof include transparent materials, such as glass, acrylic resin, polycarbonate resin, polyolefin resin, and polyethylene terephthalate resin.

The light-concentrating unit may be formed of a combination of the reflector and the prism. If it is so formed, the surfaces of the prism individually serve as a light-receiving surface, a reflection surface (reflector), and a surface on which a photoelectrode (or as a transmission unit, if provided) is disposed.

The light-concentrating device may have any structure as long as the light-concentrating unit and the transmission unit are connected, and any known structure of light-concentrating device may be adopted.

Any known technique can be used to connect the light-concentrating unit and the transmission unit. For example, the light-concentrating unit and the transmission unit may be connected directly, or fixed via a casing (having an internal face as a reflection surface or a refraction surface), a light pipe, or the like. The light-concentrating unit and the transmission unit may be connected directly, or may be connected indirectly via the casing or the like, as long as sunlight or the like concentrated by the light-concentrating unit is efficiently transmitted to the photoelectrode.

The shape and size of the light-concentrating unit, and the diameter and the number of optical fibers when the fibers are used as the transmission unit may be appropriately determined according to the scale etc. of the solar cell.

Ultraviolet rays can be prevented from being guided to the dye-sensitized solar cell by disposing a convex lens between the light-concentrating device (the light-concentrating unit) and one or more optical fibers to utilize optical aberrations or disposing a UV cut filter or the like, thereby preventing dye deterioration caused by irradiation of ultraviolet rays. In addition, the influence of the volatilization of the electrolyte solution associated with thermal energy upon direct irradiation of sunlight can be suppressed.

Moreover, it is preferable to use a mirror-finished counter electrode in order to reflect sunlight or the like irradiated efficiently from the light-concentrating device and efficiently apply the light to a titanium oxide layer with dye adsorbed thereto. A known method may be used for the mirror-finishing treatment. The mirror-finishing treatment may be performed to the extent that the photoelectric conversion efficiency as a solar cell does not degrade.

Member That Transmits Light and Member That Emits Light

The member that transmits light (light transmission member (transmission unit)) is disposed so as to be connected to the separator (spacer, sealing material). A known connecting method can be used.

The light transmission member is preferably provided with a member that emits the transmitted light (light emission member) disposed in the dye-sensitized solar cell.

One or more optical fibers can be suitably used as the light transmission member. Examples of optical fibers include those having a core portion and a clad portion, the optical fibers being formed from a material selected from the group consisting of silica-based fibers produced by a vapor-phase axial deposition method (VAD method), modified chemical vapor deposition (MCVD method), CVD, plasma process, or the like, and plastic fibers, such as polymethylmethacrylate, polystyrene, or deuterated polymethylmethacrylate.

Some optical fiber members such as plastic optical fibers may have poor solvent resistance. Therefore, to prevent an optical fiber member from being affected by the solvent used in the electrolyte solution, a glass rod material or the like is preferably disposed between the electrolyte layer and the optical fiber member. Light introduced from the optical fiber member into the dye-sensitized solar cell is reflected diffusely by disposing a glass rod material between the electrolyte layer and the optical fiber member, thereby improving conversion efficiency of the dye-sensitized solar cell.

It is desirable that the distance between the photoelectrode and the counter electrode be as narrow as possible; therefore, when one or more optical fibers are used, it is preferable to use thin optical fiber wires.

Since the light via optical fiber wires alone tends to be weak, it is preferable to use, in a combination, a material that can concentrate light via a plurality of optical fiber wires and emit the light. To prevent the amount of light via the optical fiber wires from being small, it is preferable to use a member that concentrates and emits light introduced into the dye-sensitized solar cell via one or more optical fibers.

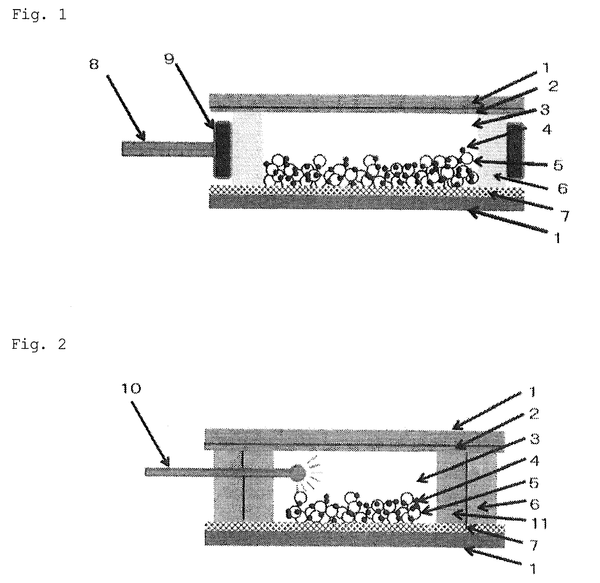

The member that emits light (light emission member, 9 in Fig. 1) is disposed so as to be connected to the separator (spacer, sealing material). A known connecting method can be used.

The light emission member is a member that emits the light transmitted by the light transmission member, in the dye-sensitized solar cell.

As the light emission member, for example, a member that emits light as follows can be used: an acrylic material or glass material having a reflection sheet attached to one surface thereof is used as a light guide plate, and light transmitted from the light-concentrating device via one or more optical fibers or the like is surface-emitted from its edges. Light introduced from the one or more optical fibers into the dye-sensitized solar cell is reflected diffusely by using this surface-emitting member, thereby improving conversion efficiency of the dye-sensitized solar cell.

It is desirable that the distance between the photoelectrode and the counter electrode be as narrow as possible; therefore, it is preferable to use a thin light emission member as the light emission member.

Light can be irradiated using an LED material or an organic EL material, other than optical fibers, as the light transmission member and the light emission member.

### (5) Method for Producing Dye-Sensitized Solar Cell

The dye-sensitized solar cell of the present invention can be produced by a known method.

For example, a photoelectrode and a counter electrode are disposed opposite to each other via a spacer; an electrolyte layer is sealed between the photoelectrode and the counter electrode; and a light transmission member and/or a light emission member is disposed on the spacer, or a light transmission member and/or a light emission member is disposed in the dye-sensitized solar cell.

The method for sealing the electrolyte layer is not limited.

For example, after the counter electrode is laminated on the semiconductor layer side of the photoelectrode, an inlet is provided, and a material constituting the electrolyte layer is injected through the inlet. The inlet may be sealed with a predetermined member or resin after the injection of the material is completed.

Moreover, when the electrolyte layer is a gel, it may be liquefied by heating when the above material is injected. When the electrolyte layer is solid, for example, a solution in which the solid electrolyte is dissolved is prepared using a solvent that can dissolve the solid electrolyte, the solution is injected into the inlet, and the solvent is then removed.

In the dye-sensitized solar cell, a light irradiation means is disposed between the photoelectrode and the counter electrode. The dye-sensitized solar cell of the present invention is a next-generation solar cell with high photoelectric conversion efficiency. The dye-sensitized solar cell of the present invention can have a module form comprising a plurality of cells.

Fig. 1 is a schematic view (cross-sectional view) showing one embodiment of the dye-sensitized solar cell of the present invention. The dye-sensitized solar cell of Fig. 1 is a dye-sensitized solar cell comprising a photoelectrode and a counter electrode that are disposed opposite to each other via an electrolyte layer.

The photoelectrode comprises a metal titanium material or titanium alloy material (1), and a semiconductor layer (layer of 5, for example, porous titanium oxide and 7, for example, anodized titanium oxide) containing a dye sensitizing agent (4) formed on the metal titanium material or titanium alloy material (1).

The counter electrode comprises a metal titanium material or titanium alloy material (1) coated with an electrochemical-reduction catalyst layer (2, for example, platinum layer).

A light irradiation means (for example, an optical fiber (optical fibers) (8) and a light emission member (9)) is disposed between the photoelectrode and the counter electrode. The electrolyte (3) of the dye-sensitized solar cell is sealed with a sealant (6, for example, a sealing material + separator (spacer)).

The photoelectrode is preferably one obtained by subjecting a metal titanium material to a gas nitriding treatment, and then an anodization treatment (surface treatment method A); or subjecting a metal titanium material to a gas nitriding treatment, an anodization treatment, and then a heating treatment under an oxidizing atmosphere (surface treatment method B).

The counter electrode is preferably a metal titanium material with platinum deposited thereon.

It is preferable to use one or more optical fibers as the light irradiation means. The light irradiation means concentrates transmitted light, and emits the light.

Fig. 2 is a schematic view (cross-sectional view) showing one embodiment of the dye-sensitized solar cell of the present invention. The dye-sensitized solar cell of Fig. 2 is a dye-sensitized solar cell comprising a photoelectrode and a counter electrode that are disposed opposite to each other via an electrolyte layer.

An LED (10) is disposed as the light irradiation means in place of the optical fiber (optical fibers) (8) and the light emission member (9) of Fig. 1. The electrolyte (3) of the dye-sensitized solar cell is sealed with a glass plate (11, used as a separator (spacer)) and a sealant (6).

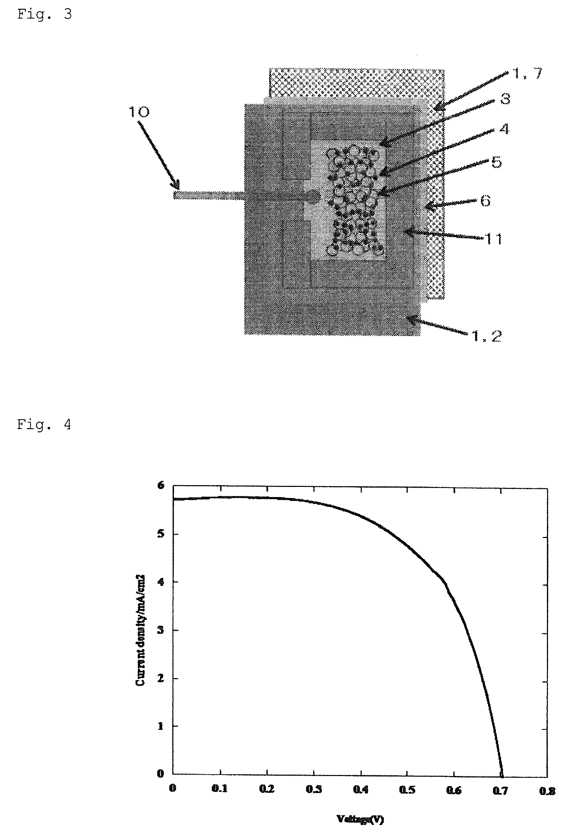

Fig. 3 is a schematic view (front view) showing one embodiment of the dye-sensitized solar cell of the present invention.

Fig. 4 shows current-voltage characteristics of the dye-sensitized solar cell of the Example (Figs. 3 and 4).

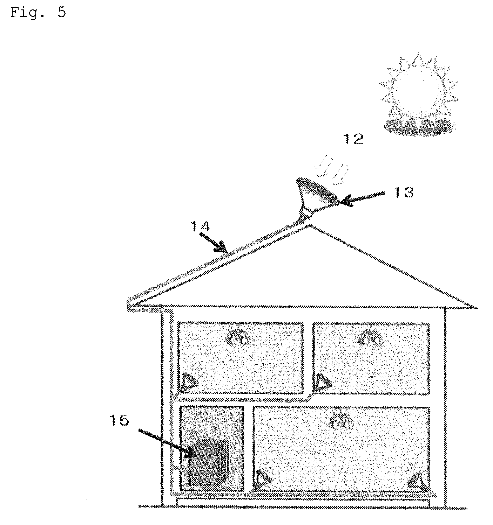

Fig. 5 is a schematic view showing one embodiment using the dye-sensitized solar cell of the present invention. Light (12, sunlight, room light, or the like) is concentrated with a light-concentrating device (13) and transmitted to a dye-sensitized solar cell (15) via optical fibers (14).

### Examples

The present invention is described below with reference to an Example; however, the present invention is not limited to the Example.

### Example

### (1) Production of Anodized Titanium Material

A metal titanium plate (titanium material, photoelectrode substrate) was degreased with trichloroethylene. Titanium nitride was then formed on the surface of the degreased metal titanium plate using a nitriding furnace (NVF-600-PC, produced by Nakanihon-Ro Kogyo Co., Ltd.).

First, the metal titanium plate was held by a plate carbon material placed in the nitriding furnace. Subsequently, in order to remove oxygen, the pressure in the nitriding furnace was reduced to 1 Pa or less, and then nitrogen gas with a high purity of 99.99% or more was introduced into the nitriding furnace to return the pressure to 0.1 MPa (atmospheric pressure).

Then, the temperature of the nitriding furnace was raised to 950°C for 2 hours.

Thereafter, heat treatment was performed in the nitriding furnace at 950°C for 1 hour, thereby forming titanium nitride on the surface of the metal titanium plate.

The metal titanium plate having titanium nitride formed on the surface thereof was anodized with 1.5 M sulfuric acid, 0.05 M phosphoric acid, and 0.3 M hydrogen peroxide at a current density of 4 A/dm² for 30 minutes. Thus, an anatase-type titanium oxide film (semiconductor layer) was formed.

### (2) Production of Photoelectrode

A dye-sensitized solar cell was produced using the above surface-treated metal titanium plate as a photoelectrode.

First, the size of the surface-treated metal titanium plate was adjusted to 16 mm × 25 mm × 1 mm (thickness).

Subsequently, a surface of the metal titanium plate to be tested was washed.

The metal titanium plate was then coated with a titania material (mixture of PST-18NR/PST-400C, produced by JGC C&C) by a squeegee method so that the coated area was 0.02 cm² (1 mm × 2 mm) (semiconductor layer).

Thereafter, the metal titanium plate was fired at 450°C for 1 hour.

After that, ruthenium-based dye N719 (dye sensitizing agent, produced by Solaronix) was diluted in a mixture containing *tert*-butanol (*t*-BuOH) and acetonitrile (CH₃CN) to prepare a dye solution.

The mixing ratio of t-BuOH to CH₃CN in the mixture was 1:1. The concentration of the ruthenium-based dye was 0.3 mM. The metal titanium plate after firing was immersed in the dye solution at 40°C for 14 hours, thereby obtaining a photoelectrode material.

### (3) Production of Dye-Sensitized Solar Cell

The counter electrode used was a material obtained by electron-beam deposition of platinum on metal titanium (electrochemical-reduction catalyst layer, platinum catalyst layer). The thickness of the deposited platinum was 200 nm, and the size of the material was 16 mm × 25 mm × 1 mm (thickness).

A separator was disposed in the gap between the photoelectrode and the counter electrode. As the separator, a glass material (thickness: 1 mm) was used.

Then, 0.01 M I₂ (iodine), 0.02 M LiI (lithium iodide), 0.24 M DMPII (1,2-dimethyl-3-propylimidazolium iodide), and 1.0 M TBP (*tert*-butylpyridine) were dissolved in acetonitrile to prepare an electrolyte solution. The prepared electrolyte solution was placed in the gap between the photoelectrode and the counter electrode to form an electrolyte layer.

Subsequently, the gap between both electrodes was sealed with a UV-cured acrylic resin (TB3017B, sealing material, produced by ThreeBond). Thus, a dye-sensitized solar cell was produced. Thereafter, an LED (light-emitting surface: 1.6 mm × 0.8 mm) was disposed between the photoelectrode and the counter electrode (Figs. 2 and 3). Fig. 2 is a cross-sectional view of the produced dye-sensitized solar cell. Fig. 3 is a front view (transparent view) of the produced dye-sensitized solar cell.

### (4) Evaluation Test for Dye-Sensitized Solar Cell

Light was irradiated to the dye-sensitized solar cell of the Example, in which an LED (light-emitting surface: 1.6 mm × 0.8 mm) was disposed between the photoelectrode and the counter electrode. Fig. 4 shows the obtained current-potential curve (current-potential curve). The results confirmed that the dye-sensitized solar cell of the Example has photoelectric conversion characteristics.

### [Description of the Reference Numerals]

1: Metal titanium material or titanium alloy material
2: Electrochemical-reduction catalyst layer (platinum layer)
3: Electrolyte
4: Dye sensitizing agent
5: Semiconductor layer (porous titanium oxide)
6: Sealant (sealing material + spacer)
7: Anodized layer (titanium oxide)
8: Optical fiber
9: Light emission member
10: LED
11: Glass plate
12: Light
13: Light-concentrating device
14: Optical fiber
15: Dye-sensitized solar cell

## Claims

1. A dye-sensitized solar cell comprising a photoelectrode and a counter electrode that are disposed opposite to each other via an electrolyte layer;
(1) the photoelectrode comprising a metal titanium material or titanium alloy material, and a semiconductor layer formed on the metal titanium material or titanium alloy material, the semiconductor layer containing a dye sensitizing agent;
(2) the counter electrode comprising a metal titanium material or titanium alloy material coated with an electrochemical-reduction catalyst layer;
(3) a light irradiation means being disposed between the photoelectrode and the counter electrode.

2. The dye-sensitized solar cell according to claim 1, wherein the semiconductor layer comprises titanium oxide.

3. The dye-sensitized solar cell according to claim 1 or 2, wherein the electrochemical-reduction catalyst layer is a platinum catalyst layer.

4. The dye-sensitized solar cell according to any one of claims 1 to 3, wherein the light irradiation means concentrates sunlight or room light with a light-concentrating device, and transmits the concentrated light to the dye-sensitized solar cell via one or more optical fibers.

5. The dye-sensitized solar cell according to any one of claims 1 to 4, wherein the light irradiation means concentrates sunlight or room light with a light-concentrating device and transmits the concentrated light to the dye-sensitized solar cell via one or more optical fibers, and a member that emits the transmitted light is disposed in the dye-sensitized solar cell.

6. The dye-sensitized solar cell according to any one of claims 1 to 3, wherein the light irradiation means uses an LED or organic EL.

7. The dye-sensitized solar cell according to any one of claims 1 to 6, wherein the photoelectrode comprises a photoelectrode substrate having a semiconductor layer containing anatase-type titanium oxide on the surface thereof, the photoelectrode being produced by the following method comprising the steps of:
(1) forming titanium nitride on the surface of a metal titanium material or titanium alloy material; and
(2) anodizing the metal titanium material or titanium alloy material having the titanium nitride formed on the surface thereof obtained in step (1) using an electrolyte solution that has an etching effect on titanium at a voltage equal to or higher than a spark-discharge-generating voltage, thereby forming an anatase-type titanium oxide film.

8. The dye-sensitized solar cell according to any one of claims 1 to 6, wherein the photoelectrode comprises a photoelectrode substrate having a semiconductor layer containing anatase-type titanium oxide on the surface thereof, the photoelectrode being produced by the following method comprising the steps of:
(1) forming titanium nitride on the surface of a metal titanium material or titanium alloy material;
(2) anodizing the metal titanium material or titanium alloy material having the titanium nitride formed on the surface thereof obtained in step (1) in an electrolyte solution that does not have an etching effect on titanium; and
(3) heating the anodized metal titanium material or titanium alloy material obtained in step (2) in an oxidizing atmosphere, thereby forming an anatase-type titanium oxide film.

9. The dye-sensitized solar cell according to claim 7 or 8, wherein the step of forming titanium nitride is performed by one treatment method selected from the group consisting of PVD treatment, CVD treatment, spraying treatment, heat treatment under an ammonia gas atmosphere, and heat treatment under a nitrogen gas atmosphere.

10. The method according to claim 9, wherein the heat treatment under a nitrogen gas atmosphere is performed in the presence of an oxygen-trapping agent.
